Europäisches Patentamt

**European Patent Office**

**Office européen des brevets**

(11) Veröffentlichungsnummer: **0 043 383**
**B1**

(12) **EUROPÄISCHE PATENTSCHRIFT**

(45) Veröffentlichungstag der Patentschrift: **13.06.84**

(21) Anmeldenummer: **80103888.6**

(22) Anmeldetag: **08.07.80**

(51) Int. Cl.³: **B 01 D 1/00** //F25B39/02

(43) Veröffentlichungstag der Anmeldung:
**13.01.82 Patentblatt 82/2**

(45) Bekanntmachung des Hinweises auf die Patenterteilung:
**13.06.84 Patentblatt 84/24**

(84) Benannte Vertragsstaaten:
**AT CH DE LI SE**

(56) Entgegenhaltungen:
**DE - A - 1 519 637**
**DE - A - 1 519 742**
**DE - A - 1 667 327**
**DE - A - 2 233 603**
**DE - A - 2 302 374**
**DE - B - 1 261 116**
**DE - B - 2 232 074**
**DE - B - 2 610 556**
**FR - A - 1 249 001**

(73) Patentinhaber: **Riedel Kälte- und Klimatechnik GmbH & Co, KG**
**Kilianstrasse 102**
**D-8500 Nürnberg (DE)**

(72) Erfinder: **Riedel, Georg**
**Förrenbacher Strasse 31**
**D-8500 Nürnberg (DE)**

(74) Vertreter: **Göbel, Matthias, Dipl.-Ing.**
**Pruppacher Hauptstrasse 5-7**
**D-8501 Pyrbaum-Pruppach (DE)**

(54) Verdampfer für flüssige und/oder gasförmige Medien, insbesondere für Kälteanlagen und Wärmepumpen.

Courier Press, Leamington Spa, England.

**Beschreibung**

Die Erfindung betrifft einen Verdampfer für flüssige oder gasförmige Medien, insbesondere für Kälteanlagen und Wärmepumpen, mit einem Mantelrohr und mehreren Innenrohren sowie zwischen den Innenrohren und dem Mantelrohr verbleibenden Durchflußräumen, die durch an den Innenrohren und dem Mantelrohr angreifenden Verbindungsscheiben stirnseitig dicht ausgebildet sind und bei dem den Innenrohren zulaufseitig eine mit einer Zuführungsöffnung für das Medium versehene gemeinsame Verteilerkammer zugeordnet ist, wobei die Verteilerkammer im Abstand zu den Innenrohren quer eine Trennwand dicht aufnimmt und wobei die Trennwand eine Vielzahl Durchtrittsöffnungen mit zu den Innenrohren geringer lichter Weist aufweist.

Bei einem bekannten Wärmetauscher (FR—A—1 249 001) ist den Innenrohren in der Verteilerkammer ein mit Durchtrittsöffnungen versehener Körper zugeordnet, der beidseitig in der Verteilerkammer Spaltenräume bildet. Abgesehen davon, daß sich die durch die Spaltenräume einstellende mehrmalige rechtwinkelige Umlenkung der Medienführung zu einem verzögerten Mediendurchsatz Anlaß gibt, sind Änderungen des Verteilereffekts nur durch Verändern der Durchmessergrößen und der Anzahl der Durchtrittsöffnungen erzielbar. Bei einem weiter bekannten Wärmetauscher (DE—B—2 232 074) ist in der Verteilerkammer mit geringem Abstand zu den Innenrohren und zur Zuführungsöffnung eine mit Durchbrüchen versehene Platte eingestellt, die zur homogenen Verteilung des Mediums im Abstand der Außenwand der Verteilerkammer endet. Obwohl durch die Ausbildung der Platte die Strömung des Mediums in den verschiedenen Innenrohren annähernd konstant ist, führt die bei diesem Austauscher ebenfalls erforderliche mehrmalige rechtwinkelige Umlenkung zur Verzögerung des Mediendurchsatzes. Außerdem sind Änderungen des Verteilereffekts nur durch Verändern der Größen der Durchbrüche bzw. Spalten zwischen der Platte und den Seitenwänden zu erreichen.

Es ist Aufgabe der Erfindung Maßnahmen zur verzögerungsfreien und gleichmäßigen Verteilung des Mediums zu den Innenrohren zu schaffen.

Der Erfindung gemäß ist diese Aufgabe dadurch gelöst, daß der Abstand von Trennwand und Innenrohren mindestens dem Durchmesser des Mantelrohres und der Abstand von Trennwand und Zuführungsöffnung etwa einem halben Durchmesser des Mantelrohres entspricht und daß die summierten Querschnitte der in der Trennwand angeordneten Durchtrittsöffnungen im wesentlichen mit einem Drittel der summierten Innenquerschnitte aller Innenrohre ausgebildet sind. Hierdurch tritt in dem der Zuführungsöffnung näheren Verteilerkammerrteil zunächst eine Stauung des Mediums und nachfolgend ohne Umlenkung über die Durchführungsöffnungen der Trennwand eine gleichmäßig verteilte Abgabe des Mediums an den Innenrohren in der Art einer Brause ein. Die Trennwand trägt so mit ihren Durchführungsöffnungen zu einer stufenweisen Entspannung des Mediums zwischen Zuführungsöffnung und Innenrohren bei.

Die Durchtrittsöffnungen können daher beliebig in der Trennwand angeordnet und mit beliebiger Form und Größe ausgeführt sein. Bevorzugt sind Durchtrittsöffnungen mit gleichen Querschnittsgrößen und/oder Querschnittsformen in Anwendung gebracht. Zu verschieden großen Durchlässen zu den Innenrohren besteht die Möglichkeit, die Durchtrittsöffnungen mit verschiedenen Querschnittsgrößen und/oder Querschnittsformen auszubilden. Darüber hinaus können die Durchtrittsöffnungen gleichmäßig über den Querschnitt der Trennwand verteilt oder gruppenweise angeordnet sein.

Gemäß weiterer Ausgestaltung des Verdampfers erlaubt die erreichte gleichmäßige Verteilung des Mediums die Anordnung einer Vielzahl dünner glattwandiger Innenrohre mit einem kreisrunden freien Durchflußquerschnitt im Mantelrohr. Abgesehen, daß diese Innenrohre keine Biegeprobleme aufwerfen, erlauben die in ihrem Querschnitt über die ganze Länge freien Innenrohre einen störungsfreien ungehinderten Durchtritt des Mediums ohne wesentliche Geschwindigkeits- bzw. Druckverluste.

Ein im besonderem Maße einfach herzustellender Verdampfer ist dann erzielbar, wenn die Verteilerkammer, die Verbindungsscheibe für die Innenrohre und die Trennwand in einem am Mantelrohr festlegbaren Fitting ausgebildet sind.

Die Erfindung ist anhand eines Ausführungsbeispiels in der Zeichnung erläutert. Hierin bedueten:

Fig. 1 einen gewendelten Verdampfer in Seitenansicht,

Fig. 2 einen geraden Verdampfer in Seitenansicht,

Fig. 3 ein Teilstück eines Verdampfers mit einer Verteilerkammer, teilweise im Schnitt, vergrößert,

Fig. 4 eine Verbindungsscheibe für Innenrohre in Draufsicht gemäß dem Schnitt nach der Linie IV—IV der Fig. 3,

Fig. 5 eine Trennwand in Draufsicht gemäß dem Schnitt der Linie V—V der Fig. 3,

Fig. 6 eine Trennwand gemäß anderer Ausführungsform in Draufsicht und

Fig. 7 einen Verdampfer gemäß einer weiteren Ausgestaltung in Seitenansicht.

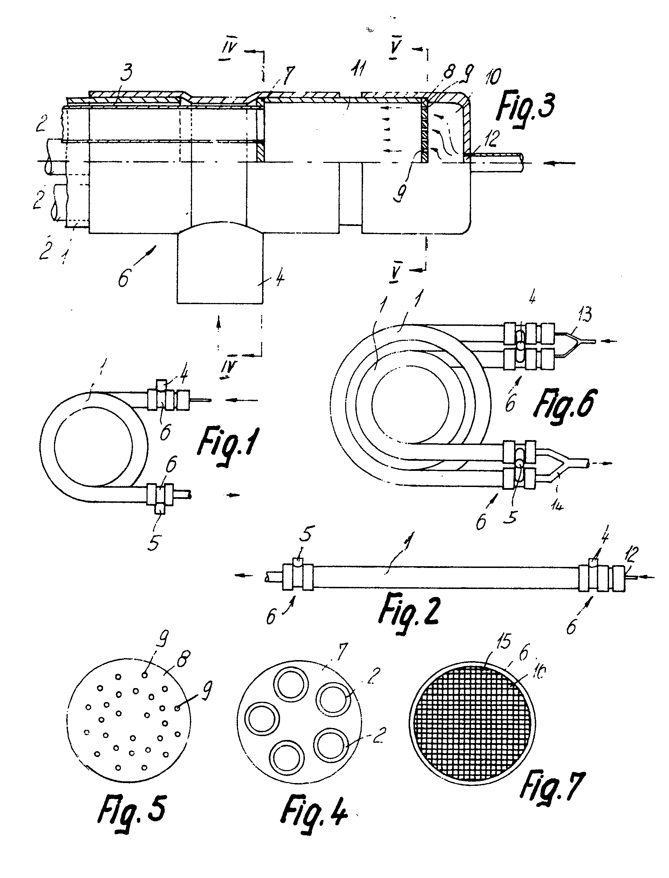

Der wendelförmig gebogene Verdampfer der Fig. 1 weist ein Mantelrohr 1 mit kreisrundem Querschnitt auf, das eine Vielzahl glattwandige, kreisrunde Innenrohre 2 für die Durchleitung eines Kältemittels aufnimmt. Zwischen dem Mantelrohr 1 und den Innenrohren 2 verbleiben Durchflußräume 3 für einen Wärmeträger, z.B. wasser. Die Durchflußräume 3 sind über Anschlüsse 4 und 5 zugänglich. Die Anschlüsse 4 und 5 sind bei den Ausführungsbeispielen der Fig. 1, 2, 3 und 6 an Fittingen 6 angeordnet, die, wie in Fig. 3 erkennbar, auf das Mantelrohr 1 des Verdampfers fest aufgebracht sind. Die Innenrohre 2 sind mit ihren Enden in Lochungen von Verbindungsscheiben 7 dicht festgelegt. Im anströmseitigen Fitting 6 ist, wie in Fig. 3 und 5 weiter gezeigt, im Abstand von etwa einer Durchmessergröße des Mantelrohres 1 vor den Innenrohren 2 eine Trennwand 8 fest angeordnet, die eine Vielzahl beliebig verteilte Durchtrittsöffnungen 9 mit geringem Querschnitt aufweist. Die Trennwand 8 bildet im Fitting 6 Verteilerteilkammern 10 und 11. In der Verteilerteilkammer 10 ist ferner eine Zuführungsöffnung 12 für das Kältemittel einmündend vorgesehen. Der Abstand von Trennwand 8 und Zuführungsöffnung 12 entspricht etwa einer halben Durchmessergröße des Mantelrohres 1.

Auf des über die Zuführungöffnung 12 in die Verteilerteilkammer 10 eintretende Kältemittel wird durch die Trennwand 8 zunächst ein Staueffekt ausgeübt, der zu einer Ausbreitung des ankommenden Kältemittels über den Querschnitt der Verteilerteilkammer 10 führt. Über die Durchtrittsöffnungen 9 tritt nachfolgend das Kältemittel in der Art einer Brause in die Verteilerteilkammer 11 und weiter in die Innenrohre 2 über, was zu reproduzierbar gleichen Wärmeübergangsleistungen aller Innenrohre 2 und gleichen Leistungen bei Verdampfern gleicher Type Anlaß ist. Die Trennwand 8 führt gewissermaßen zu einer stufenförmigen Erweiterung des Verdampfers und im Bereich der Durchtrittsöffnungen 9 zu einer Verteilung des Kältemittels zu den Innenrohren. Bevorzugt sind die summierten Querschnitte aller Durchtrittsöffnungen 9 mit einem Drittel der Größe der summierten Innenquerschnitte der Innenrohre 2 ausgelegt.

Abweichend ist der Verdampfer der Fig. 2 mit einem geraden Mantelrohr 1 und achsparallelen Innenrohren (nicht gezeigt) ausgeführt. Die Anschlüsse 4 und 5 für Wasser sind ebenfalls in Fittingen 6 ausgebildet. Der die Zuführungsöffnung 12 aufnehmende anströmseitige Fitting 6 weist eine mit Durchtrittsöffnungen versehene Trennwand (entsprechend der Fig. 3) auf, die eine stufenförmige Erweiterung und gleichmäßige Verteilung des Kältemittels an den Innenrohren 2 bewirkt.

Der Verdampfer der Fig. 6 ist durch zwei unabhängige einender konzentrisch umfassende Mantelrohre 1 mit einer Vielzahl von darin untergebrachten, jedoch nicht näher dargestellten Innenrohren 2 gebildet. Die anströmseitigen Fittinge 6 weisen, entsprechend der Ausgestaltung der Fig. 3, eine Trennwand mit Durchtrittsöffnungen für das Kältemittel auf. Die Anströmung erfolgt bei diesem Verdampfer über ein gemeinsames Verteilerstück 13, während die Abführung des Kältemittels über ein weiteres gemeinsames Verteilerstück 14 bewirkt wird. Die im Innern der Mantelrohre sich erstreckenden Durchflußräume (nicht gezeigt) stehen über mit Abzweigungen versehenen Anschlüssen 4 und 5 in Verbindung.

Die Fig. 7 zeigt eine durch ein Gitter gebildete Trennwand 8, die zwischen den Gitterstäben 15 verbleibende Durchlässe 16 aufweist. Die Durchlässe 16 übernehmen die Funktion der Durchtrittsöffnungen 9 der Trennwand 8. Auch die so gebildete Trennwand 8 bweirkt zunächst eine Erweiterung des über die Zuführungsöffnung ankommenden Kältemittels auf den Durchmesser der Verteilerteilkammer 10 bzw. des Mantelrohres 1 und ermöglicht nachfolgend über die Durchlässe 16 einen feinst verteilten Durchtritt des Kältemittels zu den Innenrohren 2.

Das Wesentliche des vorliegenden Verdampfers ist in der Anordnung einer mit Durchtrittsöffnungen 9 bzw. mit Durchlässen 16 versehenen Trennwand zwischen der Zuführungsöffnung 12 und den Innenrohren 2 zu erblicken, wobei sich die Verwendung einer Anzahl glattwandiger Innenrohre 2 besonders vorteilhaft auswirkt.

**Patentansprüche**

1. Verdampfer für flüssige oder gasförmige Medien, insbesondere für Kälteanlagen und Wärmepumpen, mit einem Mantelrohr (1) und mehreren Innenrohren (2) sowie zwischen den Innenrohren (2) und dem Mantelrohr (1) verbleibenden Durchflußräumen (3), die durch an den Innenrohren (2) und dem Mantelrohr (1) angreifenden Verbindungsscheiben (7) stirnseitig dicht ausgebildet sind und bei dem den Innenrohren (2) zulaufseitig eine mit einer Zuführungsöffnung (12) für das Medium versehene gemeinsame Verteilerkammer (10, 11) zugeordnet ist, wobei die Verteilerkammer (10) im Abstand zu den Innenrohren quer eine Trennwand (8) dicht aufnimmt und wobei die Trennwand (8) eine Vielzahl Durchtrittsöffnungen (9) mit zu den Innenrohren (2) geringer lichter Weite aufweist, dadurch gekennzeichnet, daß der Abstand von Trennwand (8) und Innenrohren (2) mindestens dem Durchmesser des Mantelrohres (1) und der Abstand von Trennwand (8) und Zuführungsöffnung (12) etwa einem halben Durchmesser des Mantelrohres (1) entspricht und daß die summierten Querschnitte der in der Trennwand (8) angeordneten Durchtrittsöffnungen (9) im wesentlichen mit einem Drittel der summierten Innenquerschnitte aller Innenrohre (2) ausgebildet sind.

2. Verdampfer nach Anspruch 1, dadurch gekennzeichnet, daß die Verteilerkammer (10, 11), die Verbindungsscheibe (7) für die Innenrohre (2) und die Trennwand (8) in einem am Mantelrohr (1) festlegbaren Fitting (6) ausgebildet sind.

3. Verdampfer nach Anspruch 1, dadurch gekennzeichnet, daß eine Vielzahl glattwandiger Innenrohre (2) mit einem kreisrunden freien Durchflußquerschnitt im Mantelrohr (1) angeordnet sind.

**Revendications**

1. Evaporateur pour fluides liquides ou gazeux, en particulier pour ceux servant aux installations à froid et aux pompes à chaleur, comprenant un tube enveloppant (1) et plusieurs tubes intérieurs (2), ainsi que des espaces de passage de flux (3) subsistant entre les tubes intérieurs (2) et le tube enveloppant extérieur, qui sont construits de façon à être étanches, côté frontal de par les disques de jonction (7), fixés sur les tubes intérieurs (2) et le tube enveloppant extérieur (1), les tubes intérieurs (2) comportant, côté admission, une chambre de distribution commune (10, 11), munie d'une ouverture d'admission (12) du fluide, la chambre de distribution (10) supportant une paroi de séparation (8) étanche, située perpendiculairement par rapport aux tubes intérieurs, la paroi de séparation (8) présentant de nombreux orifices de passage (9) d'un diamètre petit par rapport aux tubes intérieurs (2), caractéris par le fait que la distance entre la paroi de séparation (8) et les tubes intérieurs (2) correspond au moins au diamètre du tube enveloppant (1) et que la distance entre la paroi de séparation (9) et l'ouverture d'admission (12) correspond à environ la moitié du diamètre du tube enveloppant (1) et que la somme des sections transversales des orifices de passage (9), aménagés dans la paroi de séparation correspond sensiblement à un tiers de la somme des diamètres intérieurs de tous les tubes intérieurs (2).

2. Evaporateur suivant la revendication 1, caractérisé par le fait que la chambre de distribution (10, 11), le disque de jonction (7), pour les tubes intérieurs (2) et la paroi de séparation (8), comportent un raccord (6), pouvant être fixé au tube enveloppant (1).

3. Evaporateur suivant la revendication 1, caractérisé par le fait que de nombreux tubes intérieurs (2) à paroi lisse, comportant une section transversale circulaire de libre passage d'écoulement, sont disposés dans le tube enveloppant (1).

**Claims**

1. Evaporator for liquid and gaseous media, in particular for refrigerators and heat pumps, with a casing tube (1) and several inner tubes (2), and flow spaces (3) between inner tubes (2) and casing tube (1) which are rendered impervious at the end face by connecting plates (7) engaging against the inner tubes (2) and the casing tube (1), on which the inner tubes (2) have on the inlet side a common distribution chamber (10, 11) provided with an inlet opening (12) for the medium, whereby distribution chamber (10) at a distance from the inner tubes accommodates an impervious partition (8) at a right angle to them and whereby partition (8) has a number of passages (9) of small clear · width in relation to inner tubes (2), characterized by the fact that the distance between partition (8) and inner tubes (2) corresponds at least to the diameter of casing tube (1) and that the distance between partition (8) and inlet opening (12) corresponds to approximately half the diameter of casing tube (1) and that the total of the cross sections of the passages (9) located in partition (8) basically amount to one third of the total of the internal cross sections of all inner tubes (2).

2. Evaporator in accordance with claim 1 characterized by the fact that distribution chamber (10, 11), connecting plate (7) for inner tubes (2) and partition (8) are formed in a fitting (6) which can be secured on casing tube (1).

3. Evaporator in accordance with claim 1 characterized by the fact that a number of smooth walled inner tubes (2) having a clear circular flow cross section are positioned in casing tube (1).

Fig. 3

Fig. 1

Fig. 6

Fig. 2

Fig. 5

Fig. 4

Fig. 7